(19) Europäisches Patentamt
European Patent Office
Office européen des brevets

(11) **EP 2 631 540 A2**

(12) **EUROPEAN PATENT APPLICATION**

(43) Date of publication:
**28.08.2013 Bulletin 2013/35**

(21) Application number: **13156254.8**

(22) Date of filing: **21.02.2013**

(51) Int Cl.:
**F23N 5/00** (2006.01)       **F23N 5/24** (2006.01)
**F23R 3/00** (2006.01)       **F23L 7/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.02.2012 US 201213403487**

(71) Applicant: **General Electric Company
Schenectady, New York 12345 (US)**

(72) Inventor: **Kraemer, Gilbert Otto
Greenville, SC 29615 (US)**

(74) Representative: **Cleary, Fidelma
GPO Europe
GE International Inc.
The Ark
201 Talgarth Road
Hammersmith
London W6 8BJ (GB)**

(54) **Flame holding boundary control**

(57)      A power plant control system monitors a flame holding boundary indicator, such as Damköhler number, to determine a lowest amount of a quenching agent that can prevent flame holding in a predefined region of a gas turbine (100). In embodiments, the amount of quenching agent used may be minimized to reduce operating costs while ensuring safe operation of the gas turbine (100).

FIG. 2

**EP 2 631 540 A2**

**Description**

BACKGROUND OF THE INVENTION

The disclosure relates generally to control of a power plant, and more particularly to control of a flame holding boundary of a gas turbine.

In power generation, it is common to use gas turbines and combined cycle power plants to generate electricity in a power system. Such power plants typically include power plant control systems that receive desired outputs or target loads from a power system controller, for example as part of a dispatch schedule generated by the power system controller. Based on the target load, a power plant control system will determine a set point for an operating value of the power plant that should be adopted to produce the target load. The power plant control system may, for example, determine a set point for a firing temperature $T_f$ at which a gas turbine should be operated to achieve the target load. However, some ranges of firing temperature may produce undesirable exhaust products, depending on the particular design of the gas turbine employed.

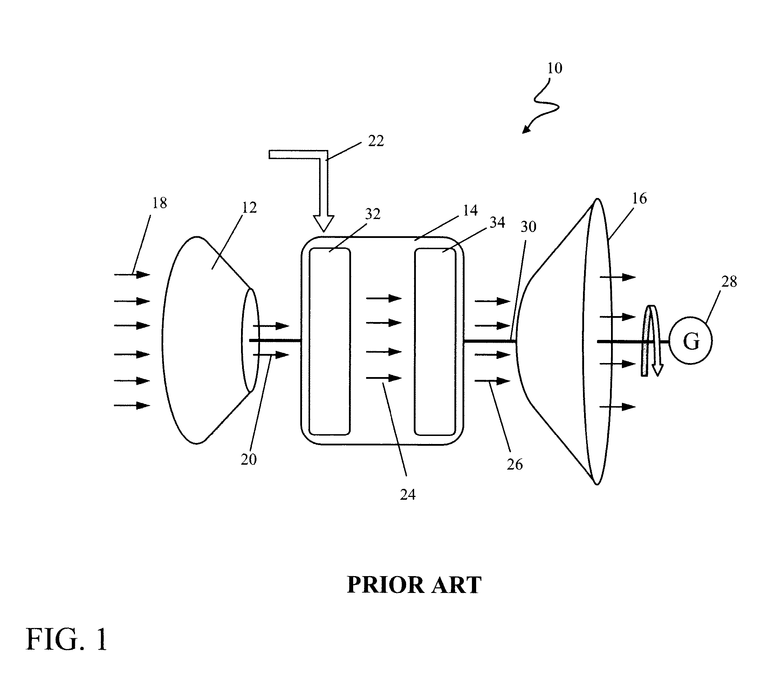

For example, referring to FIG. 1, a gas turbine 10 may include a compressor 12, a combustor 14, and a turbine 16. Compressor 12 compresses ambient air 18 into compressed air 20, which is supplied to combustor 14 along with fuel 22 to form a fuel-air mixture 24. Fuel-air mixture 22 is burned in combustor 14 to form a heated gas stream 26 that is supplied to turbine 16, which extracts energy from the heated gases to drive a load 28 via a shaft 30. Shaft 30 may also drive compressor 12. A gas turbine 10 may include a number of combustors 14 positioned flow-wise between compressor 12 and turbine 16 so that air flows through compressor 12 and travels through combustors 14 to turbine 16. Typically, compressor 12 and turbine 16 may be aligned along a common longitudinal axis of gas turbine 10, and combustors 14 may be arranged in a circular array about the common axis with discharge ends at an entrance to turbine 16.

Depending on target load, ambient conditions, and other factors, a gas turbine may produce undesirable exhaust components, such as carbon dioxide ($CO_2$) or oxides of nitrogen ($NO_x$). To reduce such undesirable exhaust components, dry, low nitrous oxide (DLN) combustors were developed in which fuel and air are mixed prior to entry into the combustion chamber of the combustor ("premixed"). For example, each combustor may include a premix chamber or region 32 into which compressed air 20 and fuel 22 are introduced to form fuel-air mixture 24, which may then be burned in combustion chamber or region 34 of combustor 14. Premixing the air and fuel permits operating the combustors at relatively lower temperatures for a given efficiency and/or target load, which reduces production of undesirable exhaust gases, such as $NO_x$, during the combustion process.

However, conditions may arise in which flame holding may occur in regions of the gas turbine in which combustion may damage or destroy parts of the gas turbine, which may lead to unsafe operating conditions or even catastrophic failure of the gas turbine. For example, where fuel nozzles and/or injectors are used to introduce fuel 22 into premix region 32, the nozzles and/or injectors may catch fire and/or retain flame. Flame holding may typically arise as a result of flashback and/or spontaneous or auto-ignition. Flashback occurs when conditions allow the combustion reaction to move upstream from the combustion chamber and into undesirable parts of the device, such as within a fuel nozzle and/or upstream of a fuel nozzle. Spontaneous or auto-ignition may occur when temperature and/or other conditions, such as fuel composition irregularities, induce the fuel-air mixture to simply initiate combustion.

Various solutions have been proposed to detect flame holding so that ameliorative steps may be taken, such as altering or stopping fuel delivery, changing firing temperature, and/or adding a quenching agent or diluent. However, these solutions are responsive in nature and rely on the successful detection and response to flame holding in undesirable locations. In addition, introducing a quenching agent may impose stresses on parts of the gas turbine as a result of impact of droplets or grains and/or as a result of sudden and/or steep temperature gradients, which stresses may cause accelerated wear and/or failure of parts, such as compressor or turbine blades. Further, addition of a quenching agent may reduce the efficiency of the gas turbine, resulting in increased fuel costs.

A common quenching agent is water, though nitrogen, argon, carbon dioxide, and other quenching agents are known and have been used in some situations. Many gas turbines in power plants include a system that injects water into the combustion system, such as through a fuel nozzle, to enhance control of combustion, such as to reduce $NO_x$ emissions. Adding water or steam into the combustion chamber may avoid thermal gradients that may result from upstream addition, which may otherwise lead to shortened component life, especially for DLN combustors. Additionally, many gas turbines in power plants include a system that adds water to air at the engine inlet, such as via a "fogger," to boost power output of a gas turbine, since power output is partly a function of mass flow rate through the gas turbine. While neither of these systems is geared toward prevention of flame holding, the former reduces flame when water is introduced before the fuel injection location and the latter adds significant quantities of water, both of which result in flame holding inhibition. However, upstream combustion system water injection may not introduce enough water to prevent flame holding under some conditions, such as operation during peak power demand in a desert region, and may also undesirably reduce part life and/or life of the power plant as a whole. In such locations, peak power demand generally occurs during times when conditions are most favorable for flame holding. While flame holding could be avoided by reducing firing temperature, the associated reduction in power output would not be tolerated because loads such as air conditioning would be considered to be essential. Since water is added to boost power output, flame holding is also inhibited, but far more water is typically added than is necessary to inhibit flame holding in undesirable regions of the gas turbine, which increases the risk of damage, wear, and/or reduced efficiency. Even during periods of lower loads, ambient conditions and/or fuel composition may require flame holding protection even though water addition for additional power generation is not required and/or desired. Where water is to be added for flame holding protection, minimal water addition would be desired to preserve fuel efficiency and since, because the water typically is derived from desalinization of sea water, cost of water used for quenching may also become a significant factor in such locations. Thus, adding more water than necessary to inhibit flame holding may undesirably increase gas turbine operation and maintenance costs as a result of water supply costs as well as efficiency reduction and wear and tear from the use of water.

BRIEF DESCRIPTION OF THE INVENTION

The invention resides in a flame holding boundary control system configured to control delivery of a quenching agent to a gas turbine. The gas turbine includes a combustor, at least one fuel delivery system, and at least one quenching agent delivery system. The flame holding boundary control system includes a quench module configured to determine an amount of quenching agent to be added to inhibit flame holding based on at least a flame holding boundary indicator such that a lowest amount of quenching agent that can inhibit flame holding in a predefined region of the gas turbine is delivered. The flame holding boundary control system also is responsive to at least an ambient condition.

In another aspect, the invention resides in a gas turbine having a compressor and a combustor in fluid communication with the compressor. The combustor is arranged to receive a discharge of the compressor, and at least one fuel delivery system may be arranged to introduce fuel into air entering the combustor. A quenching agent delivery system is arranged to introduce a quenching agent into a fuel-air mixture of the combustor and is responsive to a flame holding boundary control system arranged to control an amount of quenching agent delivered by the quenching agent delivery system. The flame holding boundary control system is responsive to a flame holding boundary indicator such that a lowest amount of quenching agent that can inhibit flame holding in a predefined region of the gas turbine is delivered.

In yet another aspect, the invention resides in a method for enabling quenching agent delivery to a gas turbine by a gas turbine control system, the gas turbine including a compressor, a combustor in fluid communication with the compressor, a fuel delivery system, and a quenching agent delivery system. The method comprises determining a value of a flame holding boundary indicator of a flow field in the combustor, and determining, responsive to the flame holding boundary indicator, a lowest amount of quenching agent to be delivered that can inhibit flame holding boundary formation in a predefined region of the combustor.

Other aspects of the invention provide methods, systems, program products, and methods of using and generating each, which include and/or implement some or all of the actions described herein. The illustrative aspects of the invention are designed to solve one or more of the problems herein described and/or one or more other problems not discussed.

The invention further resides in a computer program comprising computer program code means adapted to perform the above method when executed by a computer and in such a computer program embodied on a computer readable medium.

BRIEF DESCRIPTION OF THE DRAWING

Embodiments of the present invention will now be described, by way of example only, with reference to the accompanying drawings in which:

FIG. 1 shows a schematic diagram of a conventional gas turbine with which embodiments of the invention disclosed herein may be employed.

FIG. 2 shows a schematic diagram of a gas turbine including a control system according to embodiments of the invention disclosed herein.

FIG. 3 shows schematic diagram of a combustor according to embodiments of the invention disclosed herein.

FIG. 4 shows a schematic diagram of a premix region of a combustor according to embodiments of the invention disclosed herein.

FIG. 5 shows a profile of specific humidity versus ambient temperature that may be used according to embodiments of the invention disclosed herein.

FIG. 6 shows a profile of specific humidity versus ambient temperature that may be used according to embodiments of the invention disclosed herein.

FIG. 7 shows a profile of specific humidity versus ambient temperature that may be used according to embodiments of the invention disclosed herein.

FIG. 8 shows a chart of fuel composition (ethane content) versus ambient temperature that may be used according to embodiments of the invention disclosed herein.

FIG. 9 shows a schematic flow diagram of a method of quenching agent delivery according to embodiments of the invention disclosed herein.

FIG. 10 shows a schematic block diagram of a computing environment for implementing quenching agent delivery control according to embodiments of the invention disclosed herein.

It is noted that the drawings may not be to scale. The drawings are intended to depict only typical aspects of the invention, and therefore should not be considered as limiting the scope of the invention. In the drawings, like numbering represents like elements between the drawings.

The detailed description explains embodiments of the invention, together with advantages and features, by way of example with reference to the drawings.

DETAILED DESCRIPTION OF THE INVENTION

Aspects of the invention provide a method of power plant control that determines and delivers a minimum amount of quenching agent required to inhibit or prevent flame holding in undesirable regions of a gas turbine of the power plant. As a result of the application of embodiments, flame holding inhibition may be achieved using much less quenching agent than might typically be used, particularly since, in most applications, quenching agent addition may be based on power output requirements above the dry base load output (power output without addition of quenching agent, such as water). Quenching agent supply costs, increased fuel costs, and/or excessive wear and tear may therefore be significantly reduced where addition of quenching agent is not determined based on power output, while operation safety may be maintained. Quenching agent is not currently supplied to provide flame holding protection based on fuel composition, ambient conditions, and/or if no power augmentation is desired.

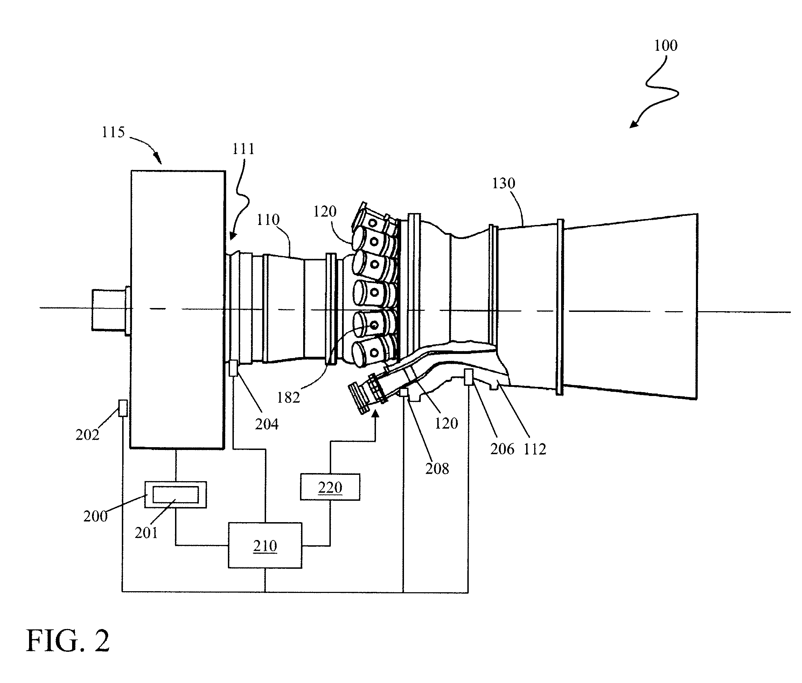

Referring to FIG. 2, a more specific example of a gas turbine 100 described above with respect to FIG. 1 and in which embodiments may be implemented is shown. As with the more general example of FIG. 1, gas turbine 100 may include a compressor 110, a combustor 120, and turbine 130. Compressor 110 and turbine 130 may be aligned along a common longitudinal axis of gas turbine 100, and a plurality of combustors 120 may be arranged in a circular array about the common axis to discharge into turbine 130. In embodiments, combustors 120 may be arranged in or pass through a compressor discharge apron 112 as will be described below.

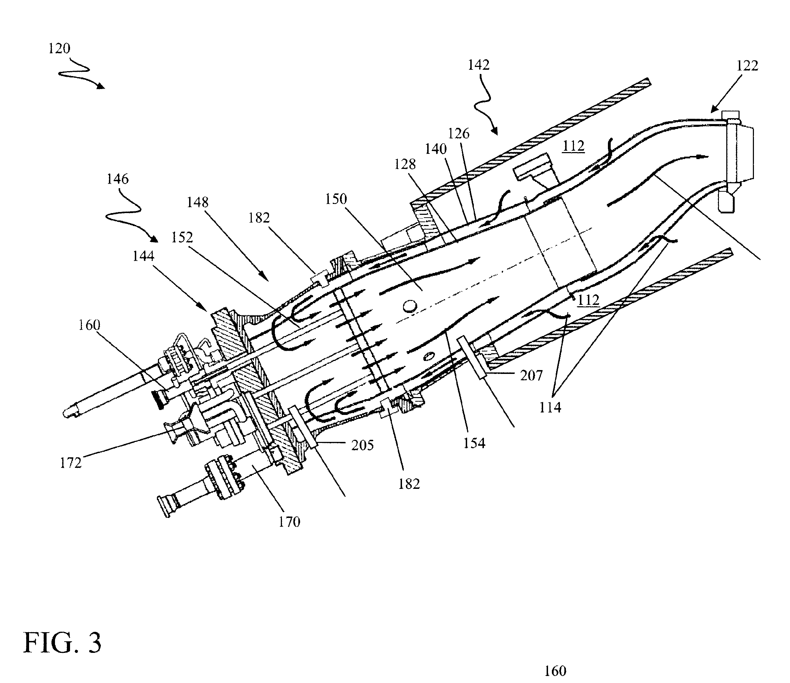

Referring to FIG. 3, a combustor 120 may include a combustor flow sleeve 126 within which a combustion liner 128 may be arranged so that an annular flow passage 140 may be formed between combustor flow sleeve 126 and combustor liner 128. An aft portion 142 of combustor flow sleeve 126 may extend into compressor discharge manifold 112 and may be permeable so that compressed air 114 may enter annular flow passage 140 and travel toward a cap 144 at a forward end 146 of combustor flow sleeve 126. For example, aft portion 142 of combustor flow sleeve 126 may include through holes, mesh, screen, or other formations to render it permeable to compressed air 114. Within combustion liner 128, a premix chamber 148 and a combustion chamber 150 may be formed so that compressed air 114 flows through annular flow passage 140 from aft portion 142 to cap 144, at which point flow may turn and travel through premix chamber 148 to combustion chamber 150, and finally through discharge end 122 to turbine 130.

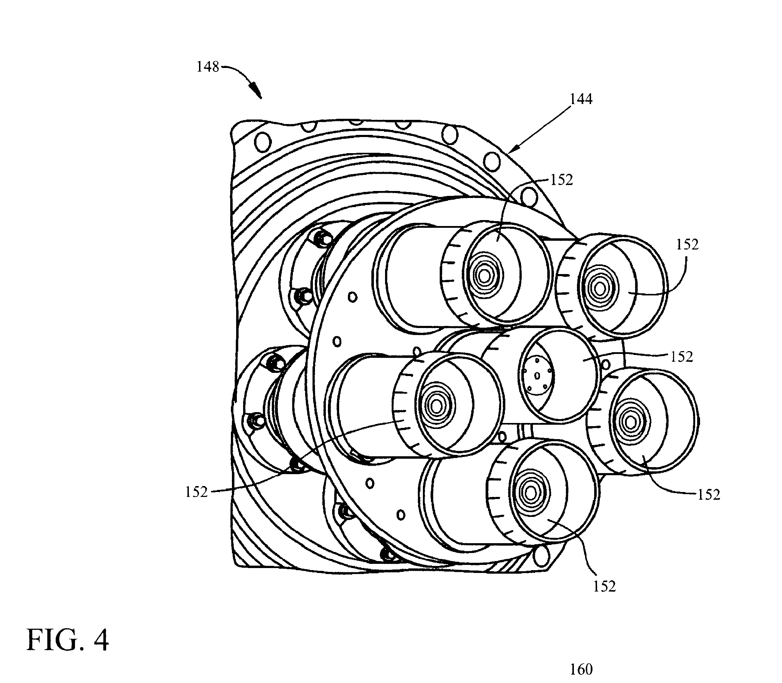

In embodiments, with additional reference to FIG. 3 and to FIG. 4, cap 144 may support one or more fuel nozzles 152 that each may be arranged to premix air, fuel, and/or an additive, such as a diluent or quenching agent, into an air-fuel mixture. Fuel nozzles 152 may be mounted in cap 144, such as in a circular array about a longitudinal axis of combustor 120, projecting into premix region 148 and toward combustion chamber or region 150. During normal operation, compressed air 114 may enter combustion region 150 after passing through or by fuel nozzle(s) 152 and/or through premix region 148 to become part of a fuel-air mixture 154, which is then burned in combustion chamber 150. To facilitate and/or enhance mixing of fuel and air, each fuel nozzle 152 may include a swirl arrangement (not shown), such as vanes or other features, that may induce turbulence and/or vortices in air flowing through and/or around fuel nozzle 152.

Depending on the particular design of gas turbine 100, each fuel nozzle 152 may supply several different fuels, fuel mixtures, and/or additives and deliver such fuels and/or additives from several delivery systems or in several modes.

In some gas turbines, three or more fuel delivery systems or modes may be employed, such as a primary fuel delivery system 160, a secondary fuel delivery system 170, and/or a tertiary fuel delivery system 172. A fuel delivery mode in embodiments may be distinct from a fuel delivery system in that a fuel delivery mode may represent a combination of fuel(s), air, diluent(s), and/or other ingredients and/or additives, each coming from a respective delivery system, to support a particular manner or range of operation of gas turbine 100. Further, each fuel nozzle 152 and/or injector 182 may deliver a different fuel and/or a different mixture of fuel and/or diluent and/or other ingredients and/or additives, such as under direction of a fuel delivery system, per a fuel delivery mode, and/or under direction of a gas turbine control system. In embodiments, distribution of fuel delivery among fuel nozzles 152 and 182 may also vary with fuel delivery mode and/or other operating conditions, such as by using a different flow rate for one or more nozzles 152 and/or injectors 182. In each of these circumstances, variation of fuel composition, mixture delivered by a fuel nozzle 152 or injector 182, and/or distribution of delivery among fuel nozzles 152 and/or 182 may have an effect on flame holding potential in combustor 120.

It should be noted that diluent or quenching agent may be introduced at a number of points, such as at compressor inlet 111, compressor discharge manifold 112, and/or about combustor flow sleeve 126 in aft portion 142 of combustor 120. When using water as a diluent or quenching agent, additional efficiencies may be achieved by introducing water at compressor inlet 111 (FIG. 2) in an amount and/or manner such that the water completely evaporates before entering compressor 100, such as with an inlet fogging system or fogger 115 (FIG. 2). For example, not only does the addition of water into the flow inhibit flame formation in combustor(s) 120, but evaporation cools the flow, which helps to inhibit flame holding, and the addition of mass into the flow may increase power output. In addition, evaporation may serve to reduce degradation of compressor performance that might be caused by liquid water striking blades of compressor 100. However, some embodiments may instead introduce water into compressor discharge manifold 112 and/or into annular flow passage 140, such as in the form of steam.

Some combustors may employ additional fuel injectors positioned upstream of the fuel nozzles to further improve emissions performance and/or operability. For example, embodiments may employ combustor casing fuel injectors 182 arranged to inject fuel into annular flow passage 140 prior to its arrival at fuel nozzles 152 as part of an annular quaternary fuel delivery system. Premixing fuel and air using combustor casing fuel injectors is typically employed to reduce $NO_x$ emissions, but may also mitigate combustor instability, provide better fuel/air mixing, and improve flame holding margin of the downstream fuel nozzles.

To reduce quenching agent usage, embodiments may employ an indicator of the likelihood of flame holding occurring in gas turbine 100. For example, a measure of the chemical reactivity of air-fuel mixture 154 in a region of interest in combustor 120 may be used to determine whether flame holding may be likely to occur. Particular regions of interest, as suggested above, are annular flow passage 140 starting at combustor casing fuel injectors 182, fuel nozzle (s) 152, and premix region 148. A useful measure of chemical reactivity in a flow in embodiments is the Damköhler number Da, which may be expressed as

$$\mathrm{Da}= \frac{\tau_{\mathrm{flow}}}{\tau_{\mathrm{chem}}}, \tag{1}$$

where $\tau_{\mathrm{flow}}$ may represent flow time scale and $\tau_{\mathrm{chem}}$ may represent chemical time scale, which are terms known in computational fluid dynamics and the study of combustion. Da may also be expressed as reaction rate divided by convective mass transport rate, or characteristic fluid time divided by characteristic chemical reaction time. However it is determined, Da is generally regarded as representing a dimensionless reaction time for a flow regime, and in embodiments, if a value of Da is maintained less than 1 for a particular air-fuel mixture flow regime, then combustion and flame holding are very unlikely to occur. Points at which Da is equal to one may therefore be regarded as belonging to a flame holding boundary in gas turbine 100, which boundary may be maintained downstream of fuel nozzle(s) 152 according to embodiments.

To determine a flame holding boundary related value, such as by determining a value of Da, embodiments may use values of parameters, such as, for example, load, temperature, fuel composition, fuel flow rate, air flow rate, and/or humidity. In particular, embodiments may employ sensors in regions of interest, such as a combustor casing sensor, a fuel nozzle sensor, and/or a premix region sensor. In addition, an ambient humidity, such as a specific humidity or a relative humidity, and/or an ambient temperature may be used to determine Da, such as by detecting humidity and/or temperature at an inlet of gas turbine 100 with a respective inlet sensor. Da may be determined through raw computation in embodiments. For example, embodiments may employ a flame holding boundary model in the form of computer program code that may be executed by a computing device, such as a controller of gas turbine 100. Such a flame holding boundary model may include structural, aerodynamic, thermodynamic, and/or additional information about gas turbine 100 so as to simulate operation of gas turbine 100. Additional information, such as sensed values of ambient and/or process conditions, may be used by the flame holding boundary model to predict and/or estimate and/or determine a location of a flame holding boundary in gas turbine 100. Other embodiments may instead apply a look-up table correlating values of a parameter to a detected value reported by a sensor, and/or values of Da to a parameter and/or a detected value reported by a sensor. Additional embodiments may employ a combination of techniques and/or a compromise between the flame holding boundary model approach and the look-up table approach to reduce computation power required and an associated amount of time required to determine Da or other suitable boundary model(s) or parameter(s) for establishing the value for addition of sufficient quenching agent quantity to inhibit flame holding.

The flame holding boundary model in embodiments may be tailored to a specific device based on test data, computational and/or analytical modeling, and/or any combination thereof as the flame holding boundary may be influenced by combustion system design and variations introduced by manufacturing. The lowest quantity of quenching agent to be added may also be responsive to the location or region in the combustor to be protected from flame holding, the fuel composition issuing from a fuel nozzle(s) 152 and/or injector(s) 182, and/or a distribution of delivery among fuel nozzles 152 and/or injectors 182. Since fuel and/or fuel mixture introduced by fuel nozzles 152 and/or upstream fuel injectors 182 may vary in fuel composition, distribution, and/or amount during normal engine operation, the quantity of quenching agent may be varied accordingly to protect downstream components.

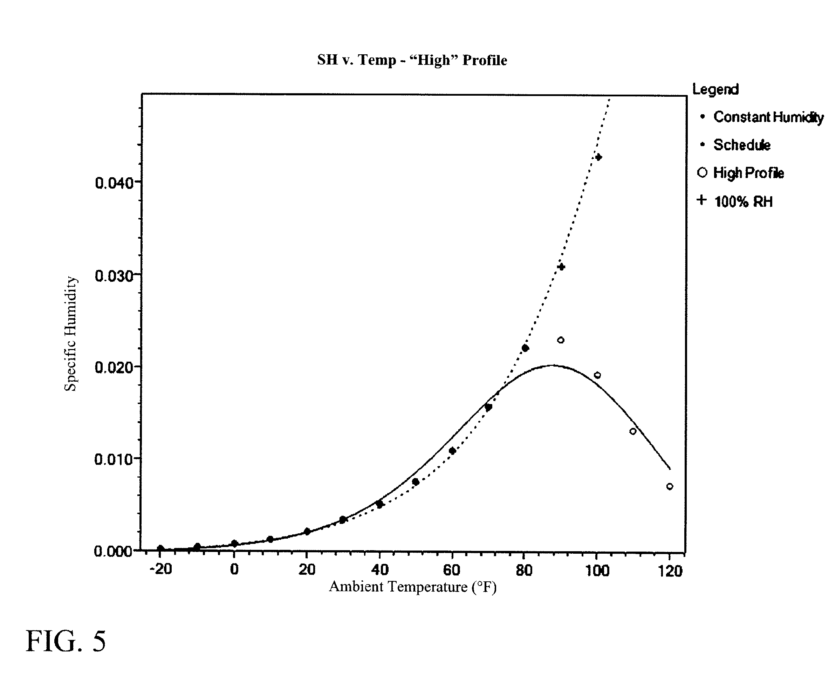

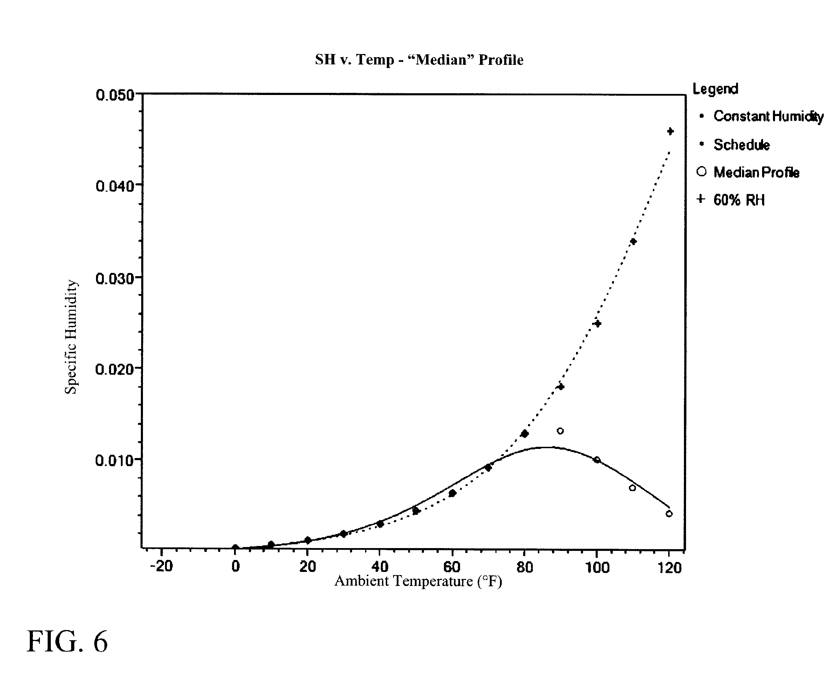

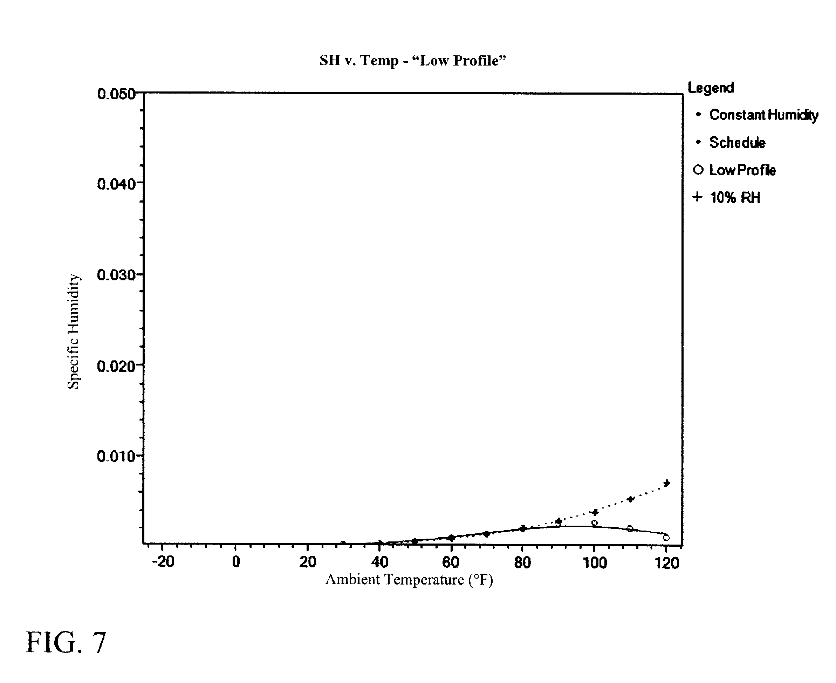

Some conditions and/or parameters may be determined based on sensed values and subsequently used in determining a flame holding boundary. For example, specific humidity may be difficult to determine from raw data. As is known, specific humidity is a measure of actual water content in a given volume of air, as is absolute humidity, whereas relative humidity is simply an indicator of how much of a capacity to hold water is observed. Specific humidity, therefore, can be a useful indicator of when ambient conditions might require quenching to inhibit flame holding, though absolute humidity might be used in embodiments. Specific humidity schedules or profiles have been derived based on geographical location using historical data so that, for a given site, a series of curves or tables relating specific humidity to relative humidity and ambient temperature may be employed. An example of such a set of curves is shown in FIGS. 5-7, where three such curves for the United States are shown, each chart representing variation of specific humidity with ambient temperature for a specific relative humidity value. As can be seen, specific humidity increases with temperature for each relative humidity value up to a point, then decreases, which shows why water must be added to inhibit flame holding even when relative humidity may be high since the actual amount of water in the unaugmented fuel-air mixture would be too low to prevent flame holding. In addition, the profiles of FIGS. 5-7 also show that it may be necessary to add a quenching agent, such as water, to quench or control flame holding at cooler temperatures under some conditions and/or fuel compositions.

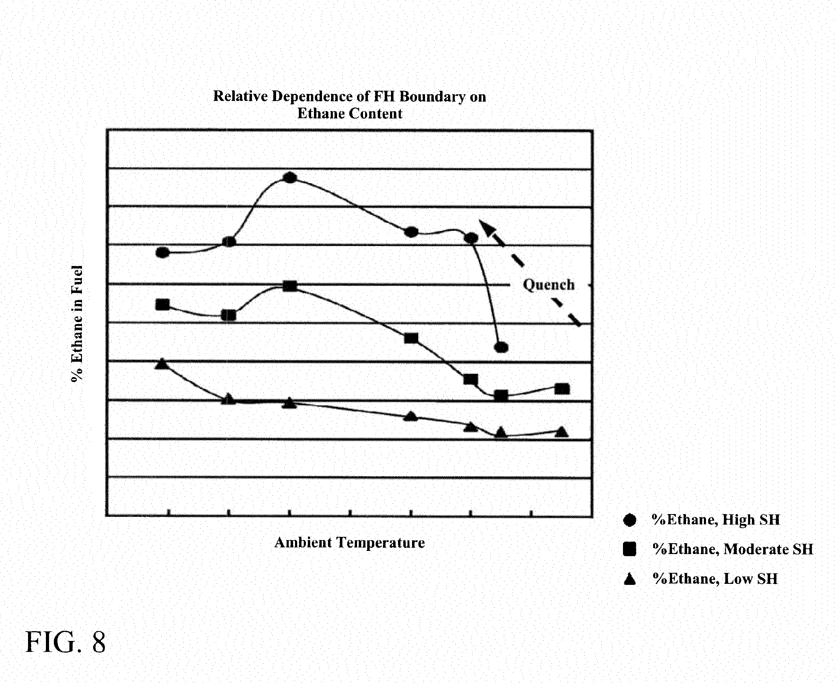

Using profiles such as those shown in FIGS. 5-7, a relationship between an existing quantity of ambient water and ambient temperature may be used to determine an additional amount of quenching agent to be added, if any, for a given operating condition, fuel composition, and/or combustor design. Operating condition may be determined, for example, from a firing temperature or power output set point, an actual detected load, a turbine speed, and/or other parameters. For example, FIG. 8 shows a series of curves of ethane content in fuel versus ambient temperature. Each curve may represent a flame holding boundary for a respective one of three humidity profiles, such as those shown in FIGS. 5-7. Each data point may represent a percentage of ethane at which flame holding may begin, such as in a most flame holding susceptible region of gas turbine 100, for a given ambient temperature and specific humidity. Above each point, flame holding may occur, and a quenching agent, such as water, should be added, while below each point, no quenching agent is required since flame holding may not occur. As may be apparent from FIG. 8, quenching may be required at any temperature depending on fuel composition and specific humidity. Using such a profile, a quantity of quenching agent, such as water, needed to bring specific humidity below flame holding boundary may be determined, which may then be added to the fuel-air mixture. Depending on the manner in which the quenching agent is added, the quantity of quenching agent to be added may be determined as a flow rate to be administered or added. It should also be recognized that conditions may arise in which water content of ambient air is sufficient to inhibit flame holding, so that no quenching agent need be added for flame holding inhibition, though users may still add water for power output enhancement. In embodiments, an upper boundary of quenching agent addition may also be established to take into account wear and/or damage due to addition of quenching agent, flame stability in combustion chamber 150, dynamics of gas turbine 100, dynamics of fluid through combustor 120, and/or other factors as may be suitable and/or desired.

Embodiments, with reference to FIGS. 2 and 3, may therefore include a quenching agent delivery control system 200 that may include a quench module 201 configured to receive a respective value from one or more of an ambient condition sensor 202, a compressor inlet sensor 204, a compressor discharge sensor 206, and/or a combustor casing sensor 208. In addition, embodiments may include a fuel nozzle and/or premix region sensor 205, and/or a combustion chamber sensor 207 in communication with quenching agent delivery control system 200 and/or quench module 201. As seen in FIG. 2, quench module 201 of quenching agent delivery control system 200 may receive values from one or more of sensors 202-208 via a gas turbine control system 210, which may also provide information from a fuel delivery control system 220. While quenching agent delivery control system 200, quench module 201, gas turbine control system 210, and/or fuel delivery control system 220 may be shown and/or described as separate components and/or sections of code, it should be recognized that this is for convenience and to assist with description. In embodiments, quenching agent delivery control system 200, quench module 201, and/or fuel delivery control system 220 may be part of or executed by gas turbine control system 210 if desired and/or appropriate, for example, though other combinations of any or all of these, in whole or in part, may be employed within the scope of embodiments. It should also be noted that more than one sensor may be deployed at each location, such as to detect a respective condition or parameter. For example, ambient condition sensor 202 could represent two sensors, one detecting ambient temperature and another detecting relative humidity.

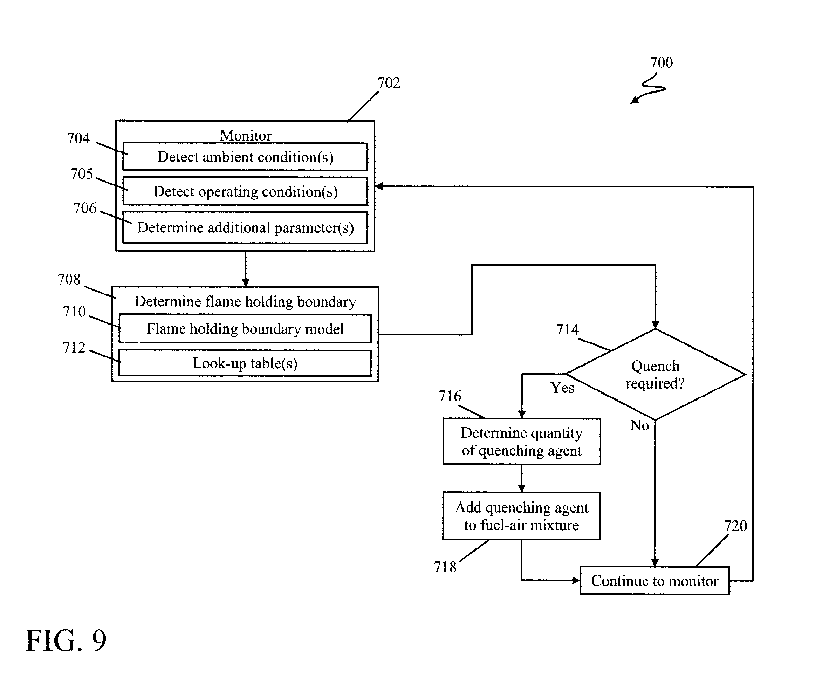

In embodiments, a method 700 shown in FIG. 9 may be performed, such as by a computing device as part of quenching agent delivery control system 200, quench module 201, gas turbine control system 210, and/or fuel delivery control system 220. Reference may be made to quantities or values being determined, techniques for which may have been discussed above if not specifically discussed below.

Monitoring may be conducted (block 702), such as monitoring an ambient condition (block 704), detecting an operating condition (block 705), and/or monitoring a parameter (block 706) of gas turbine 100. For example, ambient temperature and/or ambient relative humidity may be monitored, such as with ambient condition sensor(s) 202. In addition, a fuel mixture or composition, such as by receiving fuel composition information from fuel delivery controller 220, gas turbine load, and/or turbine speed may be monitored, and/or another parameter may be monitored. A flame holding boundary may then be determined (block 708), such as by using a flame holding boundary model (block 710) and/or by using a look-up table (block 712) as discussed above. For example, a value for Damköhler number Da may be determined based on detected ambient condition(s) from block 704 and/or determined parameter(s) from block 706. Using results of flame holding boundary determination in block 708, it may be determined whether quenching is required (block 714). For example, if Da is greater than or equal to one, then quenching may be required, and a quantity of quenching agent required may be determined (block 716). Embodiments may also determine whether quenching is required by using a look-up table relating fuel composition, ambient temperature, and specific humidity. The amount or quantity of quenching agent may then be determined as an amount of water that should be added to bring specific humidity of air in gas turbine 100 to a level at which Da is known to be less than one or at which flame holding may be inhibited. In embodiments, specific humidity may be determined from a relationship between relative humidity and ambient temperature using detected values of ambient relative humidity and ambient temperature.

The determined quantity of quenching agent may then be added to fuel-air mixture (block 718), such as with inlet fogging system or fogger 115 and/or another device or system at another point in gas turbine 100, such as injecting steam into compressor discharge manifold 112 in embodiments. The determined quantity of quenching agent may therefore be determined as a flow rate to be administered, such as by inlet fogging system or fogger 115. Monitoring may then continue (block 720) by returning to detecting ambient condition(s) and/or determining additional parameter (s) (blocks 702, 704, 706).

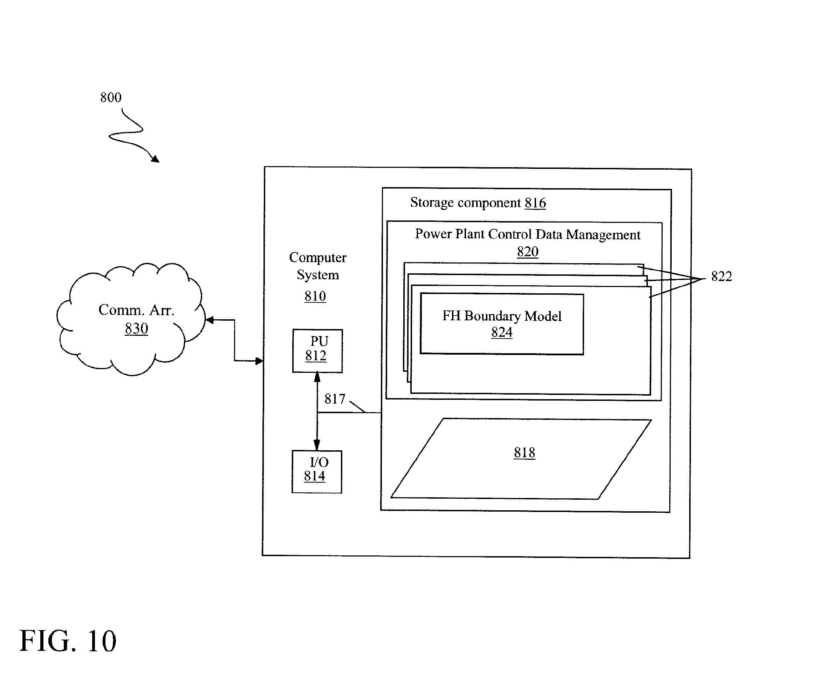

Turning to FIG. 10, an illustrative environment 800 for a quenching agent delivery control computer program product is schematically illustrated according to an embodiment of the invention. To this extent, environment 800 includes a computer system 810, such as quenching agent delivery control system 200, quench module 201, gas turbine control system 210, fuel delivery control system 220, and/or other computing device that may be part of a gas turbine that may perform a process described herein in order to execute a quenching agent delivery control method according to embodiments. In particular, computer system 810 is shown including a quenching agent delivery control program 820, which makes computer system 810 operable to manage data in a quenching agent delivery controller or control system by performing a process described herein, such as an embodiment of the quenching agent delivery control method 700 discussed above.

Computer system 810 is shown including a processing component or unit (PU) 812 (e.g., one or more processors), an input/output (I/O) component 814 (e.g., one or more I/O interfaces and/or devices), a storage component 816 (e.g., a storage hierarchy), and a communications pathway 817. In general, processing component 812 executes program code, such as quenching agent delivery control program 820, which is at least partially fixed in storage component 816, which may include one or more computer readable storage medium or device. While executing program code, processing component 812 may process data, which may result in reading and/or writing transformed data from/to storage component 816 and/or I/O component 814 for further processing. Pathway 817 provides a communications link between each of the components in computer system 810. I/O component 814 may comprise one or more human I/O devices, which enable a human user to interact with computer system 810 and/or one or more communications devices to enable a system user to communicate with computer system 810 using any type of communications link. In addition, I/O component 814 may include one or more sensors, such as sensors 202-208 discussed above. In embodiments, a communications arrangement 830, such as networking hardware/software, enables computing device 810 to communicate with other devices in and outside of a node in which it is installed. To this extent, quenching agent delivery control program 820 may manage a set of interfaces (e.g., graphical user interface(s), application program interface, and/or the like) that enable human and/or system users to interact with quenching agent delivery control program 820. Further, quenching agent delivery control program 820 may manage (e.g., store, retrieve, create, manipulate, organize, present, etc.) data, such as quenching agent delivery control data 818, using any solution. In embodiments, data may be received from one or more sensors, such as sensors 202-208 discussed above.

Computer system 810 may comprise one or more general purpose computing articles of manufacture (e.g., computing devices) capable of executing program code, such as quenching agent delivery control program 820, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. Additionally, computer code may include object code, source code, and/or executable code, and may form part of a computer program product when on at least one computer readable medium. It is understood that the term "computer readable medium" may comprise one or more of any type of tangible medium of expression, now known or later developed, from which a copy of the program code may be perceived, reproduced, or otherwise communicated by a computing device. For example, the computer readable medium may comprise: one or more portable storage articles of manufacture, including storage devices; one or more memory/storage components of a computing device; paper; and/or the like. Examples of memory/storage components and/or storage devices include magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other tangible computer readable storage medium now known and/or later developed and/or discovered on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments. A technical effect of the executable instructions is to implement a quenching agent delivery control method and/or system and/or computer program product that uses an indicator of flame holding boundary in a gas turbine to determine whether flame holding inhibition is required, such as by adding a quenching agent to a fuel-air mixture. Embodiments may employ a look-up table, one or more models, and/or other techniques to determine an amount of quenching agent required to inhibit flame holding in a gas turbine, which amount may be just enough to achieve flame holding inhibition. Thus, embodiments may optimize quenching agent usage so that as little quenching agent as may be reasonable may be used in flame holding inhibition, saving quenching agent and money, as well as reducing wear and tear on a gas turbine. Further, flame stability and other factors may be considered to establish an upper bound of quenching agent addition so as to avoid disruption and/or cessation of combustion, resonance, and/or other undesirable circumstances.

The computer program code may be written in computer instructions executable by the controller, such as in the form of software encoded in any programming language. Examples of suitable computer instruction and/or programming languages include, but are not limited to, assembly language, Verilog, Verilog HDL (Verilog Hardware Description Language), Very High Speed IC Hardware Description Language (VHSIC HDL or VHDL), FORTRAN (Formula Translation), C, C++, C#, Java, ALGOL (Algorithmic Language), BASIC (Beginner All-Purpose Symbolic Instruction Code), APL (A Programming Language), ActiveX, Python, Perl, php, Tcl (Tool Command Language), HTML (HyperText Markup Language), XML (extensible Markup Language), and any combination or derivative of one or more of these and/or others now known and/or later developed and/or discovered. To this extent, quenching agent delivery control program 820 may be embodied as any combination of system software and/or application software.

Further, quenching agent delivery control program 820 may be implemented using a set of modules 822. In this case, a module 822 may enable computer system 810 to perform a set of tasks used by quenching agent delivery control program 820, and may be separately developed and/or implemented apart from other portions of quenching agent delivery control program 820. For example, a module 822 may include a flame holding boundary model 824, which may be a representation of gas turbine 100 and/or combustor 120 in computer code form that may simulate operation of gas turbine 100 so that flame holding boundary location and/or presence and/or value may be determined. Such a model may include aerodynamic, structural, thermodynamic, fluid dynamic, combustion dynamic, and/or other information as may be desirable and/or appropriate for flame holding boundary determination. As used herein, the term "component" means any configuration of hardware, with or without software, which implements the functionality described in conjunction therewith using any solution, while the term "module" means program code that enables a computer system 810 to implement the actions described in conjunction therewith using any solution. When fixed in a storage component 816 of a computer system 810 that includes a processing component 812, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computer system 810.

When computer system 810 comprises multiple computing devices, each computing device may have only a portion of quenching agent delivery control program 820 fixed thereon (e.g., one or more modules 822). However, it is understood that computer system 810 and quenching agent delivery control program 820 are only representative of various possible equivalent computer systems that may perform a process described herein. To this extent, in other embodiments, the functionality provided by computer system 810 and quenching agent delivery control program 820 may be at least partially implemented by one or more computing devices that include any combination of general and/or specific purpose hardware with or without program code. In each embodiment, the hardware and program code, if included, may be created using standard engineering and programming techniques, respectively.

Regardless, when computer system 810 includes multiple computing devices, the computing devices may communicate over any type of communications link. Further, while performing a process described herein, computer system 810 may communicate with one or more other computer systems using any type of communications link. In either case, the communications link may comprise any combination of various types of wired and/or wireless links; comprise any combination of one or more types of networks; and/or utilize any combination of various types of transmission techniques and protocols now known and/or later developed and/or discovered.

As discussed herein, quenching agent delivery control program 820 enables computer system 810 to implement a quenching agent delivery control product and/or method, such as that shown schematically in FIG. 9. Computer system 810 may obtain quenching agent delivery control data 818 using any solution. For example, computer system 810 may generate and/or be used to generate quenching agent delivery control data 818, retrieve quenching agent delivery control data 818 from one or more data stores, receive quenching agent delivery control data 818 from another system or device, such as one or more of sensors 202-208, in or outside of a gas turbine, quenching agent delivery controller, quenching agent delivery control system, and/or the like.

In another embodiment, the invention provides a method of providing a copy of program code, such as quenching agent delivery control program 820 (FIG. 10), which implements some or all of a process described herein, such as that shown schematically in and described with reference to FIG. 9. In this case, a computer system may process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one tangible computer readable medium. In either case, the set of data signals may be transmitted/received using any type of communications link.

In still another embodiment, the invention provides a method of generating a system for implementing a quenching agent delivery control product and/or method. In this case, a computer system, such as computer system 810 (FIG. 10), can be obtained (e.g., created, maintained, made available, etc.), and one or more components for performing a process described herein can be obtained (e.g., created, purchased, used, modified, etc.) and deployed to the computer system. To this extent, the deployment may comprise one or more of: (1) installing program code on a computing device; (2) adding one or more computing and/or I/O devices to the computer system; (3) incorporating and/or modifying the computer system to enable it to perform a process described herein; and/or the like.

It is understood that aspects of the invention can be implemented as part of a business method that performs a process described herein on a subscription, advertising, and/or fee basis. That is, a service provider could offer to implement a quenching agent delivery control product and/or method as described herein. In this case, the service provider can manage (e.g., create, maintain, support, etc.) a computer system, such as computer system 810 (FIG. 10), that performs a process described herein for one or more customers. In return, the service provider can receive payment from the customer(s) under a subscription and/or fee agreement, receive payment from the sale of advertising to one or more third parties, and/or the like.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A flame holding boundary control system configured to control delivery of a quenching agent to a gas turbine (100), the gas turbine including a combustor (120), at least one fuel delivery system (160), and at least one quenching agent delivery system (200), the flame holding boundary control system comprising:

   a quench module (201) configured to determine an amount of quenching agent to be added to a fuel-air mixture (24) to inhibit flame holding based on at least a flame holding boundary indicator that is responsive to at least an ambient condition such that a lowest amount of quenching agent that can inhibit flame holding in a predefined region of the gas turbine (100) is delivered.

2. The flame holding boundary control system of claim 1, wherein the flame holding boundary indicator of a flame holding boundary includes a chemical reactivity of a flow field in the gas turbine (100).

3. The flame holding boundary control system of claim 1 or 2, wherein the flame holding boundary indicator includes a Damköhler number of a flow field in the gas turbine (100) and the quench module (201) determines the amount of quenching agent to be added as a quenching agent flow rate so that the Damköhler number has a value of less than 1 in the predefined region.

4. The flame holding boundary control system of claim 3, wherein the quenching agent flow rate is determined responsive to a relationship between quenching agent flow rate and the Damköhler number of the flow field in the predefined region of the gas turbine (100).

5. The flame holding boundary control system of claim 4, wherein the relationship includes a relationship between ambient specific humidity, ambient temperature, an engine operating condition, and a fuel composition.

6. The flame holding boundary control system of any preceding claim, wherein the at least an ambient condition includes an ambient relative humidity and an ambient temperature.

7. The flame holding boundary control system of claim 6, wherein the quenching agent includes water, the flame holding boundary indicator is determined based on a relationship between specific humidity, fuel composition and ambient temperature, an ambient specific humidity is determined based on a relationship between relative humidity and ambient temperature, and the amount of quenching agent to be added is further determined to bring a specific humidity of the fuel-air mixture to at least a predefined value.

8. The flame holding boundary control system of claim 7, wherein the flame holding boundary indicator is further determined responsive to a fuel composition.

9. The flame holding boundary control system of any preceding claim, wherein the quenching agent delivery control system (200) includes a fogger (115) arranged at an inlet of a compressor of the gas turbine and responsive to the control system (200) such that the determined amount of quenching agent is added to the fuel-air mixture (24).

10. A gas turbine (100) comprising:

   a compressor (110);
   a combustor (120) in fluid communication with the compressor (110) and arranged to receive a discharge of the compressor (110);
   at least one fuel delivery system (160, 170, 172, 180) arranged to introduce fuel (22) into air entering the combustor (14);
   a quenching agent delivery system (180) arranged to introduce a quenching agent into at least one of air or a fuel-air mixture (24) upstream of the combustor (14); and
   the flame holding boundary control system of any of claims 1 to 9.

11. The gas turbine of claim 10, wherein the at least one fuel delivery system includes a primary fuel delivery system (160) having at least one primary fuel injector (182) arranged in a cap (144) of the combustor (14), and the at least one fuel delivery system further includes at least one fuel injector arranged upstream of the at least one primary fuel injector in the cap (144) of the combustor (14).

12. The gas turbine of claim 11, wherein the quenching agent delivery system is arranged to deliver quenching agent to one of an inlet of the combustor (14), an inlet of the compressor (110), or a discharge of the compressor (110).

13. The gas turbine of claim 11 or 12, wherein the flame holding boundary indicator includes a composition of fuel delivered by the at least one fuel delivery system (160, 170, 172, 180).

14. A method for enabling quenching agent delivery to a gas turbine by a gas turbine control system, the gas turbine including a compressor (110), a combustor (120) in fluid communication with the compressor (110), a fuel delivery system, and a quenching agent delivery system, the method comprising the steps of:

determining a value of a flame holding boundary indicator of a flow field in the combustor; and
determining, responsive to the flame holding boundary indicator, a lowest amount of quenching agent to be delivered that can inhibit flame holding boundary formation in a predefined region of the combustor.

15. A computer program, comprising computer program code means adapted to perform the method of claim 14, when executed by a computer.

16. The computer program of claim 15, embodied on a computer-readable medium.

**PRIOR ART**

FIG. 1

EP 2 631 540 A2

FIG. 2

EP 2 631 540 A2

FIG. 3

EP 2 631 540 A2

EP 2 631 540 A2

FIG. 4

**SH v. Temp - "High" Profile**

FIG. 5

EP 2 631 540 A2

SH v. Temp - "Median" Profile

FIG. 6

EP 2 631 540 A2

FIG. 7

Relative Dependence of FH Boundary on Ethane Content

FIG. 8

EP 2 631 540 A2

FIG. 9

EP 2 631 540 A2

FIG. 10